# EUROPÄISCHE PATENTSCHRIFT

(11) **EP 2 246 219 B1**
(45) Veröffentlichungstag und Bekanntmachung des Hinweises auf die Patenterteilung: **29.02.2012**
(21) Anmeldenummer: 10004226.6
(22) Anmeldetag: 21.04.2010
(51) Int. Cl.: B60R 11/04

(54) **Halterung für einen lichtsensitiven Sensor hinter einer durchsichtigen Scheibe**
Holder for a light-intensive sensor behind a translucent disc
Fixation pour un capteur photosensible derrière une vitre transparente

(30) Priorität: 29.04.2009 DE 102009019381
(43) Veröffentlichungstag der Anmeldung: 03.11.2010
(73) Patentinhaber: Valeo Schalter und Sensoren GmbH, 74321 Bietigheim-Bissingen (DE)
(72) Erfinder: Nicolai, Jens, 03103 Neupetershain (DE); Lägler, Andreas, 74389 Cleebronn (DE); Cywinski, Thorsten, 71711 Murr (DE)

(56) Entgegenhaltungen:
- EP-A1- 1 389 566
- WO-A1-03/053743
- DE-A1- 10 156 850
- US-A1- 2003 010 890

## Beschreibung

### Stand der Technik

Die Erfindung betrifft eine Halterung für einen lichtsensitiven Sensor hinter einer durchsichtigen Scheibe, insbesondere eine Halterung für eine Kamera hinter einer Windschutzscheibe eines Fahrzeugs, nach der Gattung des Hauptanspruchs.

Es ist aus einer Vielzahl von Anwendungen bekannt, dass solche Halterungen zum Beispiel an der Innenseite der Windschutzscheibe eines Fahrzeuges angebracht werden, um mit optischen Mitteln hier den Frontbereich oder bei anderen Anbringungen den Seiten- oder Heckbereich des Fahrzeugs zu erfassen und die so gewonnenen Bilddaten oder andere Daten beispielsweise in einem Fahrerassistenzsystem auszuwerten.

Die üblicherweise verwendeten Halterungen sind dabei in einem vorgegebenen Bereich innen an der Windschutzscheibe angebracht und schatten dabei eventuell in diesem Bereich die Windschutzscheibe derart ab, dass bei bestimmten äußeren Witterungsumständen ein Beschlag innen auf der Windschutzscheibe in diesem Bereich der Abschattung durch mangelhafte Belüftung oder sonstwie auftretende Temperaturdifferenzen entstehen kann.

Beispielsweise ist aus der DE 101 56 850 B4 bekannt, dass bei einer gehäuseartigen Halterung für eine Kamera an der Windschutzscheibe das Gehäuse im unteren Bereich in vorgegebenen Grenzen luftdurchlässig durch einen Einbau eines staubdichten Filters ist. Hierbei kann durch einen Luftaustausch mit dem Innenraum des Fahrzeugs eine Beschlagbildung vermindert werden.

Darüber hinaus ist auch noch aus der EP 1 389 566 B1 bekannt, dass in dem Bereich der Abschattung eine transparente Zusatzscheibe innen an der Windschutzscheibe angebracht ist. Die zwischen der Windschutzscheibe und der transparenten Zusatzscheibe eingeschossene Luftschicht wirkt als thermische Isolation, sodass sich die Temperatur der Zusatzscheibe nicht stark von der Temperatur im Innenraum des Fahrzeugs unterscheidet und somit ein Niederschlag von Wasserdampf, der das Sichtfeld einer Kamera als Beschlag behindern könnte, nicht stattfindet.

Halterungen für lichtsensitive Sensoren sind anch in DE 10 156 850 A und EP 1 389 566 A offenbart.

Auch kann alternativ ein Heizen der Windschutzscheibe im Bereich der Abschattung vorgesehen werden, wobei allerdings zusätzlich ein Heizelement auf der Windschutzscheibe aufgebracht werden muss, das in der Regel einen hohen Stromverbrauch aufeist.

### Darstellung der Erfindung

Die Erfindung geht von einer Halterung für einen lichtsensitiven Sensor hinter einer durchsichtigen Scheibe aus, die einen Innen- von einem Außenraum abgrenzt, wobei die Halterung mit einem nahezu geschlossenen Gehäuse einen Bereich an der Innenseite der Scheibe abschattet. Um zu verhindern, dass die durch die Abschattung in diesem Bereich, wie eingangs erwähnt, bei bestimmten äußeren Witterungsumständen ein Beschlag innen auf der Scheibe in diesem Bereich der Abschattung entsteht, wird gemäß der Erfindung eine Halterung unit den Merkmalen des Patentanspruchs 1 benutzt.

Dadurch, dass der erfindungemäße Stoff Feuchtigkeit aus der Luft im Bereich der Scheibe, die von der Halterung abgeschattet wird, aufnimmt, wird auf einfache Weise eine Beschlagbildung an der Scheibe verhindert.

Der feuchtigkeitsabsorbierende Stoff sollte dabei in besonders vorteilhafter Weise hinsichtlich der Farbe und der Oberflächenstruktur lichtabsorbierend sein, damit durch diese Auskleidung der Gehäuseinnenwand keine Reflexionen auf der Scheibe entstehen, die insbesondere bei einer Anwendung, bei der die Halterung eine Kamera trägt, die vorzugsweise hinter der Windschutzscheibe eines Fahrzeugs, zur optischen Erfassung der Fahrzeugumgebung vom Innenraum durch die Scheibe hindurch, stören könnten.

Bevorzugt besteht der feuchtigkeits- und lichtabsorbierende Stoff aus einer schwarzen Moltonfaser. Gemäß der Erfindung wird der Stoff durch Beflockung der Gehäuseinnenwand mit einem feuchtigkeits- und lichtabsorbierenden Material gebildet. Auch andere feuchtigkeits- und lichtabsorbierende Materialien kommen hier in Betracht.

Gemäß der Erfindung ist die Gehäusewand im Bereich der Auskleidung mit dem innenliegenden Stoff mit Lüftungsschlitzen versehen, wobei der Luftaustausch durch die Lüftungsschlitze mit einem ein vor diesen angebrachten Lüfter auf einfache Weise noch verstärkt werden kann.

Durch die hier gebildete Luftströmung durch den Stoff hindurch ist für eine ausreichende Hinterlüftung der Scheibe im beschlagsgefährdeten Bereich gesorgt, wobei der erfindungemäße Stoff auch als Filter für Partikel und Feuchtigkeit wirkt.

### Kurze Beschreibung der Zeichnung

Ein Ausführungsbeispiel der Erfindung wird anhand der Figuren der Zeichnung erläutert. Es zeigen:
Figur 1 eine Ansicht auf eine Halterung für eine Kamera hinter der Windschutzscheibe einer Fahrzeugs mit einer inneren Auskleidung aus einem feuchtigkeits- und lichtabsorbierenden Stoff.
Figur 2 eine Ansicht auf die Halterung nach der Figur 1 von unten mit zusätzlichen Lüftungsschlitzen.

### Weg zur Ausführung der Erfindung

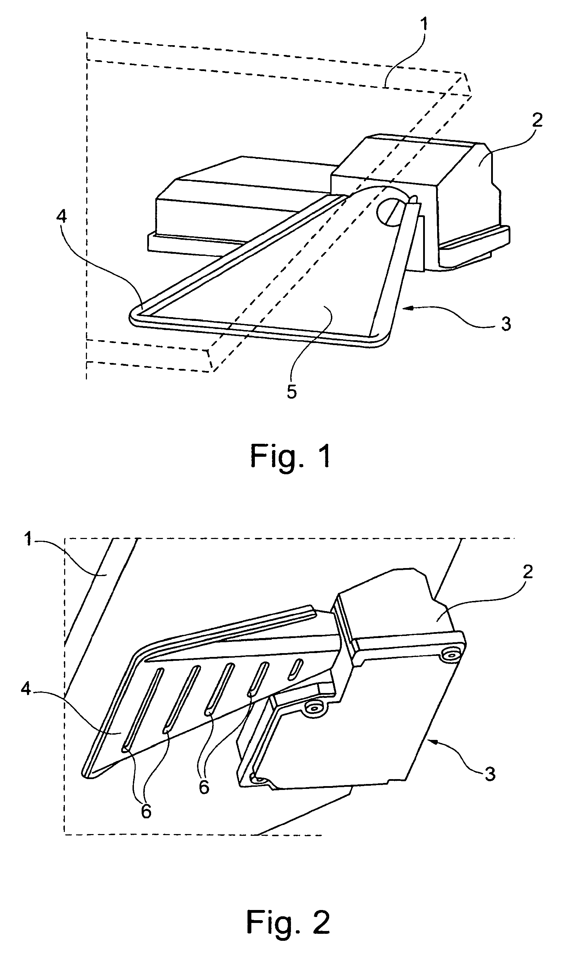

Figur 1 zeigt eine schematische Ansicht einer Scheibe 1, hier die Windschutzscheibe eines nicht näher erläuterten Fahrzeugs, hinter der im Innenraum des Fahrzeugs eine elektronische Kamera 2 an einer Halterung 3 angebracht ist. Mit der Kamera 2 ist es beispielsweise möglich, Bilddaten, hier im Frontbereich des Fahrzeugs, zu erfassen, die in einem computergesteuerten Fahrerassistenzsystem ausgewertet werden können.

Um eine ungehinderte klare Sicht durch die Scheibe 1 hindurch für die Kamera 2 zu gewährleisten, muss verhindert werden, dass durch eine Abschattung, die hier insbesondere durch die untere Gehäusewand 4 in einem gegenüberliegenden Bereich auf der Scheibe 1 entsteht, bei bestimmten äußeren Witterungsumständen ein Beschlag durch Wasserdampf innen auf der Scheibe 1 entsteht. Gemäß der Erfindung ist die Gehäusewand 4, mit einem feuchtigkeitsabsorbierenden Stoff 5 belegt, der zum Beispiel aus feuchtigkeits- und lichtabsorbierenden schwarzen Moltonfasern besteht.

Aus der Ansicht nach Figur 2 ist erkennbar, dass in der Gehäusewand 4 der Halterung 3 Lüftungsschlitze 6 angeordnet sind, sodass ein Luftaustausch durch die Lüftungsschlitze 6, der eventuell noch durch einen hier nicht gezeigten Lüfter verstärkt werden kann, ermöglicht ist und der für eine ausreichende Hinterlüftung der Scheibe 1 im beschlagsgefährdeten Bereich sorgt, wobei der Stoff 5 auch als Filter für Partikel und Feuchtigkeit wirkt.

## Patentansprüche

1. Halterung (3) für einen lichtsensitiven Sensor hinter einer durchsichtigen Scheibe (1), die einem Innen- von einem Außenraum abgrenzt, wobei die Halterung (3) mit einem nahezu geschlossenen Gehäuse einen Bereich an der innenseite der Scheibe abschattet, wobei eine Gehäusewand (4) innen, der Scheibe (1) weitgehend gegenüberliegend, mit einem feuchtigkeitsabsorbierenden Stoff (5) belegt ist, **dadurch gekennzeichnet, dass** der Stoff durch Beflockung der Gehäusewand (4) mit einem feuchtigkeits- und lichtabsorbierenden Material gebildet ist und die Gehäusewand (4) im Bereich der Auskleidung mit dem innenliegenden Stoff (5) Lüftungsschlitze (6) aufweist.

2. Halterung nach Anspruch 1, **dadurch gekennzeichnet, dass** der feuchtigkeitsabsorbierende Stoff (5) hinsichtlich der Farbe und der Oberflächenstruktur lichtabsorbierend ist.

3. Halterung nach Anspruch 2, **dadurch gekennzeichnet, dass** der feuchtigkeits- und lichtabsorbierende Stoff (5) aus einer schwarzen Moltonfaser besteht.

4. Halterung nach einem der vorhergehenden Ansprüche, **dadurch gekennzeichnet, dass** im Bereich der Lüftungsschlitze (6) ein Lüfter angebracht ist.

5. Halterung nach einem der vorhergehenden Ansprüche, **dadurch gekennzeichnet, dass** die Halterung (3) eine Kamera (2) als Sensor trägt, die hinter der Scheibe (1), vorzugsweise der Windschutzscheibe eines Fahrzeugs, zur optischen Erfassung der Fahrzeugumgebung vom Innenraum durch die Scheibe (1) hindurch angebracht ist.

## Claims

1. Holder (3) for a light-sensitive sensor behind a transparent pane (1) that separates an internal space from an external space, wherein the holder (3) having a virtually closed housing shields a region at the inside of the pane, wherein a housing wall (4) is covered on the inside, substantially opposite the pane (1), by a moisture-absorbing fabric (5), **characterized in that** the fabric is formed by covering the housing wall (4) by way of flocking with a moisture- and light-absorbing material and the housing wall (4) has ventilation slots (6) in the region of the covering with the fabric (5) which is located on the inside.

2. Holder according to Claim 1, **characterized in that** the moisture-absorbing fabric (5) is light-absorbing in terms of the colour and the surface structure.

3. Holder according to Claim 2, **characterized in that** the moisture- and light-absorbing fabric (5) consists of black Molton fibre.

4. Holder according to one of the preceding claims, **characterized in that** a fan is arranged in the region of the ventilation slots (6).

5. Holder according to one of the preceding claims, **characterized in that** the holder (3) carries a camera (2) as a sensor, which camera (2) is attached behind the pane (1), preferably the windscreen of a vehicle, for optically detecting the area surrounding the vehicle through the pane (1) from the internal space.

## Revendications

1. Support (3) pour détecteur photosensible placé derrière une vitre transparente (1) qui sépare un espace intérieur vis-à-vis d'un espace extérieur,
le support (3) masquant par un boîtier presque fermé une partie de la face intérieure de la vitre,
une paroi (4) du boîtier située largement face à la vitre (1) du côté intérieur étant occupée par une substance (5) absorbant l'humidité,
**caractérisé en ce que**
la substance est formée en floquant sur la paroi (4) du boîtier un matériau absorbant l'humidité et la lumière et
**en ce que** la paroi (4) du boîtier présente des fentes (6) de ventilation dans la partie intérieure revêtue de la substance (5).

2. Support selon la revendication 1, **caractérisé en ce que** la substance (5) absorbant l'humidité absorbe la lumière par sa coloration et sa structure de surface.

3. Support selon la revendication 2, **caractérisé en ce que** la substance (5) absorbant l'humidité et la lumière est constituée de fibres noires de molleton.

4. Support selon l'une des revendications précédentes, **caractérisé en ce qu'**un ventilateur est installé au niveau des fentes de ventilation (6).

5. Support selon l'une des revendications précédentes, **caractérisé en ce que** le support (3) porte comme détecteur une caméra (2) qui est installée en arrière de la vitre (1), de préférence la vitre de pare-brise d'un véhicule, pour saisir optiquement l'environnement du véhicule depuis l'habitacle et à travers la vitre (1).
